# EUROPEAN PATENT APPLICATION

(11) **EP 4 617 993 A1**
(43) Date of publication of application: **17.09.2025**
(21) Application number: 23942466.6
(22) Date of filing: 23.06.2023
(51) Int. Cl.: G06Q 50/10

(54) **INFORMATION PROCESSING DEVICE, INFORMATION PROCESSING METHOD, AND PROGRAM**

(71) Applicant: Sustech Inc., Tokyo 105-0014 (JP)
(72) Inventor: TANNO, Yusuke, Tokyo 105-0014 (JP); OHASHI, Akifumi, Tokyo 105-0014 (JP)
(74) Representative: RGTH
(86) International application number: PCT/JP2023/023407
(87) International publication number: WO 2024/262035

(57) **Abstract**

A problem to be solved is to make it possible to effectively use environmental value. A service provider server 1 of an embodiment includes a GHG emissions and environmental value calculation unit 103, an achieved emissions value calculation unit 105, a comparative judgment unit 106, and a control unit 107. The GHG emissions and environmental value calculation unit 103 calculates, for the activity status of an organization, greenhouse gas emissions and environmental value. The achieved emissions value calculation unit 105 calculates an achieved greenhouse gas emissions value of the organization by subtracting a part of environmental value in an environmental value DB 202 from the calculated greenhouse gas emissions. The comparative judgment unit 106 makes a judgment about possibility of achievement of a target greenhouse gas emissions value by comparing the achieved greenhouse gas emissions value and a target greenhouse gas emissions value. The control unit 107 controls use of the environmental value of the environmental value DB 202 based on a result of the judgment. Thereby, the problem described above is solved.

## Description

### TECHNICAL FIELD

The present invention relates to an information processing apparatus, an information processing method, and a program.

### BACKGROUND ART

There has conventionally been a technique for performing electric power trading for each electric power generation method (see, for example, Patent Document 1). In each of organizations such as companies, facilities adopting an electric power generation method in which greenhouse gas is not emitted at the time of generating electric power (for example, solar power generating facilities and the like) are installed in a factory and the like in order to achieve a greenhouse gas emissions reduction goal set for the organization. Further, for example, by the technique of Patent Document 1 described above and the like, each organization can aim to achieve the emissions goal by using electric power by an electric power generation method such as solar power generation in which greenhouse gas is not emitted at the time of generating electric power. Thus, it can be said that, in electric power generated from a non-fossil energy source, such as renewable energy, non-fossil value of not being derived from fossil fuel, which is a kind of environmental value, exists in addition to kWh value and the like that the electric power itself has, as electric power by an electric power generation method in which greenhouse gas accompanying combustion of fossil fuel, such as carbon dioxide, is not emitted.

### Citation List

### Patent Document

Patent Document 1: Japanese Unexamined Patent Application, Publication No. 2021-158839

### DISCLOSURE OF THE INVENTION

### Problems to be Solved by the Invention

In general, however, the concept of environmental value itself is difficult to understand in the first place. Penetration of Non-Fossil Certificates, Green Power Certificates, J-Credits, and the like, which are assumed to be representative environmental value trading means, are limited, and, in the current situation, it cannot be said that environmental value is effectively used.

The present invention has been made in view of such a situation, and an object thereof is to make it possible to effectively use environmental value.

### Means for Solving the Problems

In order to achieve the above object, an information processing apparatus of one aspect of the present invention includes:
first storage control unit configured to execute control to acquire a target greenhouse gas emissions value of an organization and cause the target greenhouse gas emissions value to be stored into a first database;
activity status acquisition unit configured to acquire an activity status of the organization;
calculation unit configured to, for the activity status of the organization, calculate greenhouse gas emissions and environmental value;
second storage control unit configured to execute control to cause environmental value possessed by the organization, including the calculated environmental value, to be stored into a second database;
achieved emissions value calculation unit configured to calculate an achieved greenhouse gas emissions value of the organization by subtracting at least a part of the environmental value stored in the second database from the calculated greenhouse gas emissions;
comparative judgment unit configured to make a judgment about possibility of achievement of a greenhouse gas emissions goal by comparing the achieved greenhouse gas emissions value and the target greenhouse gas emissions value; and
control unit configured to control use of the environmental value stored in the second database based on a result of the judgment by the comparative judgment unit.

Further, an information processing method and a program according to aspects of the present invention are a method and a program corresponding to the information processing apparatus of the one aspect of the present invention.

### Effects of the Invention

According to the present invention, it is possible to effectively use environmental value.

### BRIEF DESCRIPTION OF THE DRAWINGS

FIG. 1 is a diagram showing an outline of the present service to which one embodiment of an information processing apparatus of the present invention is applied;
FIG. 2 is a diagram showing a flow (distribution) of acquisition and use of electric power and environmental value in the present service of FIG. 1;
FIG. 3 is a block diagram showing an overall configuration of an information processing system for providing the present service of FIG. 1, the information processing system including the one embodiment of the information processing apparatus of the present invention;
FIG. 4 is a block diagram showing a configuration of hardware of a service provider server, which is the one embodiment of the information processing apparatus of the present invention, in the information processing system of FIG. 3;
FIG. 5 is a diagram showing input and output of information to and from an environmental value DB of FIG. 2; and
FIG. 6 is a functional block diagram showing a functional configuration for executing at least a process for trading including environmental value, in a functional configuration of the service provider server including the hardware of FIG. 4.

### PREFERRED MODE FOR CARRYING OUT THE INVENTION

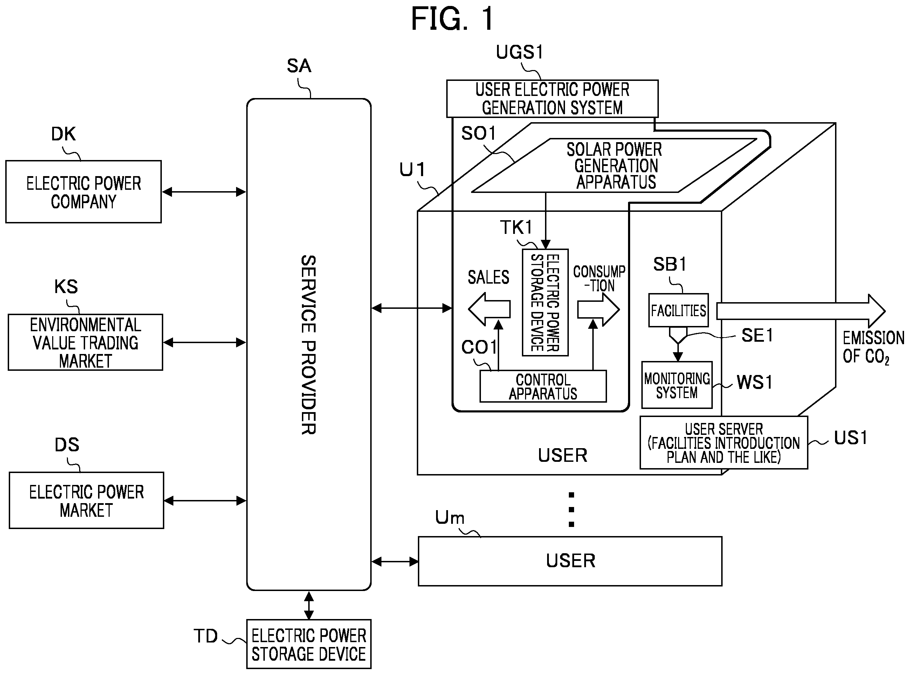

An embodiment of the present invention will be described below using drawings. First, a description will be made on a service provided by an information processing system that includes one embodiment of an information processing apparatus of the present invention (hereinafter referred to as "the present service") with reference to FIG. 1. FIG. 1 is a diagram showing an outline of the present service to which the one embodiment of the information processing apparatus of the present invention is applied. In the description below, numerals will be given to reference signs when it is necessary to individually describe components, and description will be made without the numerals at the time of collectively describing the components. For example, users U1 to Um are collectively referred to as users U.

As shown in FIG. 1, the present service is supplied from a service provider SA to each of the m (m is an integer value of 1 or more) users U1 to Um, and an electric power company DK.

The users U1 to Um are those who demand electric power to conduct business and the like (electric power demanders) and are simultaneously those who conduct business and the like for supplying electric power (electric power suppliers). Each of them is one organization similar to a company or the like, and some of them may be individuals. The electric power includes, in addition to electric power supplied from the electric power company DK, electric power generated each of the users U1 to Um and used for self-consumption and renewable energy supplied from other users Up (p is an arbitrary integer value between 2 and m inclusive). Though it is exemplified that the users U are electric power demanders and electric power suppliers in this example, each of the users U may be only an electric power demander or only an electric power supplier.

As those related with the present service, an environmental value trading market KS and an electric power market DS exists in addition to the electric power company DK and the users U1 to Um. The present service is for effectively utilizing environmental value by the service provider SA mediating between the electric power company DK and the users U1 to Um, using a decarbonization platform, and trading (sales and purchase) of environmental value on the environmental value trading market KS and electric power on the electric power market DS being individually performed.

The environmental value is such that is called, for example, Non-Fossil Certificates, Green Power Certificates, or J-Credits, and retail electricity suppliers and demanders (users such as companies) can sell and purchase Non-Fossil Certificates (for zero-emission value and the like) through the environmental value trading market KS, for example, Japan Electric Power exchange (JEPX). Recently, many companies can set targets for emissions and reductions of greenhouse gas such as CO₂, and, if the reductions are insufficient for the targets (if too much CO₂ is emitted), can realize achievement of the emissions target by purchasing environmental value (Non-Fossil Certificates, Green Power Certificates, J-Credits, or the like).

The service provider SA performs mediation for electric power trading of each of the users U1 to Um. Therefore, the service provider SA has an electric power storage device TD for storing electric power. The electric power storage device TD is for absorbing time lag caused by electric power trading. By utilizing the electric power storage device TD, it becomes possible to shift the time point of generating electric power and the time point of performing self-consumption or sales of the electric power, and, as a result, it is possible to enhance profitability. The electric power storage device TD is, for example, a storage battery, a device for conversion to a chemical substance such as hydrogen or ammonia, or an EV battery. Though only one electric power storage device TD is exemplified in this example, a plurality of electric power storage device TD may be arranged in a distributed manner, or a third party may manage the electric power storage device TD as a management body. In other words, the number and arrangement of electric power storage device TD and, furthermore, the management body do not matter.

Users Uk (k is an arbitrary integer value between 1 to m inclusive) demand electric power supplied from the electric power company DK or the like to run their own businesses and the like. At least some of the users U1 to Um, however, have facilities capable of producing renewable energy, electric power storage device, and the like, thereby having an aspect as electric power suppliers. As for the renewable energy generation, for example, solar power generation, wind electric power generation, biomass electric power generation, hydroelectric power generation, geothermal electric power generation, wave electric power generation, and pumping-up electric power generation are exemplified.

Specifically, for example, a user U1 among the users U1 to Um has, in order to perform solar power generation, a user electric power generation system UGS1, facilities SB1 for running the user U1's own business (for example, an engine for causing manufacturing facilities to operate in a factory), a monitoring system WS1 connected to the facilities SB1 via loT sensors SE1, and a user server US1 to perform information processing for carrying out the business. The user electric power generation system UGS1, the monitoring system WS1, and the user server US1 are connected via an internal network or the like to be capable of exchanging data.

The user electric power generation system UGS1 includes a solar power generation apparatus SO1, an electric power storage device TK1, a control apparatus CO1. The solar power generation apparatus SO1 generates electric power by receiving sunlight. The electric power generated by the solar power generation apparatus SO1 is stored in the electric power storage device TK1. Based on an instruction from the service provider SA, the control apparatus CO1 controls use forms, such as selling the electric power stored in the electric power storage device TK1 and possessed environmental value to others (for example, the environmental value trading market KS, the electric power company DK, and other users Up (p is an arbitrary integer value between 2 to m inclusive)) via the service provider SA, making good use thereof in the user U1, and purchasing electric power and environmental value from others.

The monitoring system WS1 monitors operating statuses of the facilities SB1 by the loT sensors SE1 attached to the facilities SB1, and outputs information thereabout to the control apparatus CO1. Here, monitoring of the operating statuses of the facilities SB1 refers to detecting, for example, how much the facilities SB1 are emitting greenhouse gas (hereinafter referred to as "GHG") and how much electric power consumed by the facilities SB1 (self-power consumption) is. In the user server US1, for example, data of a plan for introducing facilities is stored, and a future greenhouse gas (GHG) emissions reduction value calculated from data of a plan for introducing energy-saving facilities in the business is outputted to the control apparatus CO1. The same goes for the users U2 to Um other than the user U1.

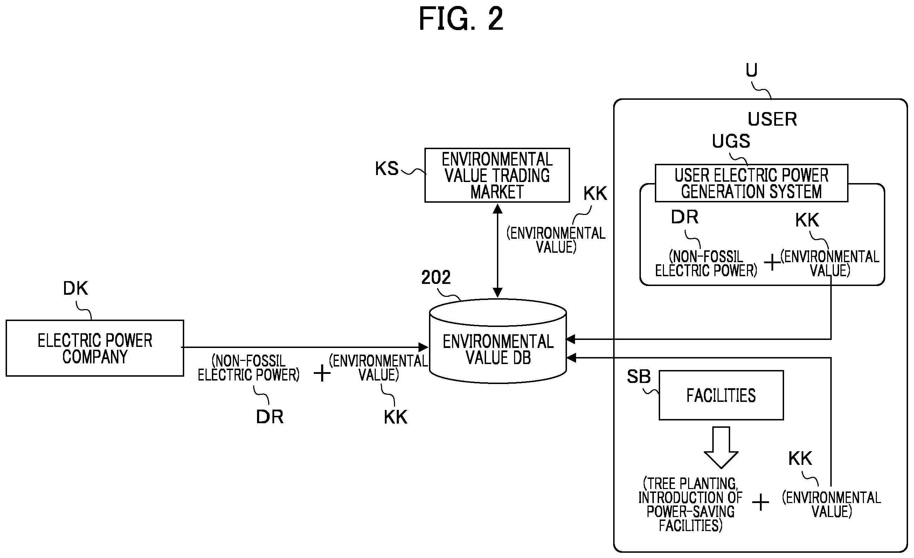

Next, distribution of electric power and environmental value will be described with reference to FIG. 2. FIG. 2 is a diagram showing a flow (distribution) of acquisition and use of electric power and environmental value in the present service of FIG. 1. As shown in FIG. 2, non-fossil electric power DR and environmental value KK are acquired from the electric power company DK by the service provider SA and stored into environmental value DB 202. Specifically, 100% carbon offset electric power, which is a set of electric power and environmental value, is provided from the electric power company DK. From each of user electric power generation systems UGS-1 to UGS-m of the users U, the non-fossil electric power DR (self-generated electric power derived from renewable energy by sunlight) and environmental value KK corresponding to the electric power are acquired by the service provider SA and stored into the environmental value DB 202. Further, from the users U, the environmental value KK that occur by the users U newly introducing energy-saving facilities or planting trees is inputted and is stored into the environmental value DB 202. The environmental value KK stored into the environmental value DB 202 in this way is sold and purchased on the environmental value trading market KS by the service provider SA.

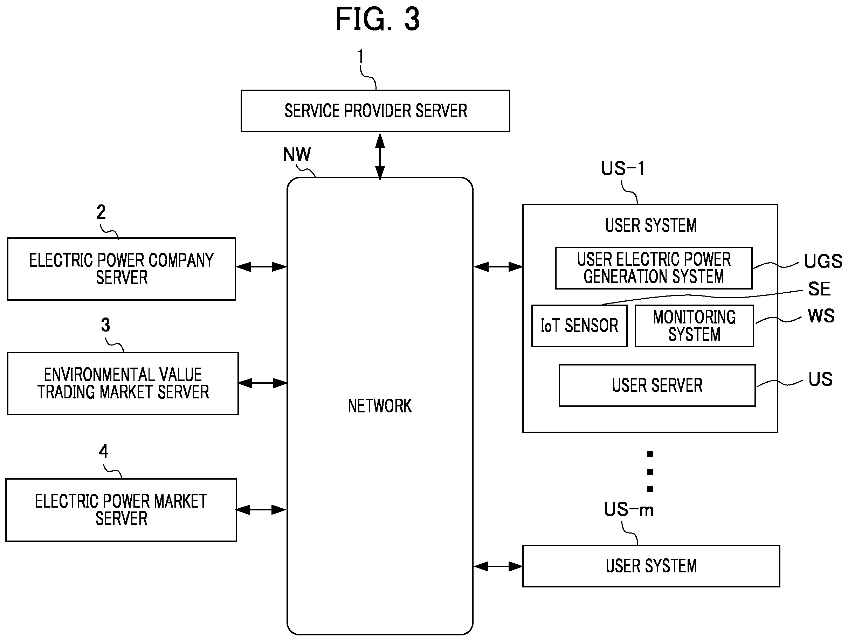

The service provider SA collects demand and supply information about electric power and environmental value between an electric power company server 2 and user systems US-1 to US-m, using the decarbonization platform provided by a service provider server 1 shown in FIG. 3, and supports sales and purchase of electric power through an electric power market server 4, and sales and purchase of environmental value through an environmental value trading market server 3.

The decarbonization platform is a platform capable of, by utilizing Al (artificial intelligence) forecasting demand and supply of electric power generated by the electric power company DK and a user Uk (Uk is one among U1 to Um) and environmental value, judging whether to sell or procure electric power and environmental value depending on each situation, and optimally performing trading of the electric power and the environmental value individually or by combining electric power and environmental value from different sources, for each of the electric power company DK and the user Uk.

The decarbonization platform performs sales and purchase of the non-fossil electric power DR of the electric power company DK or the electric power DR generated from each of the user electric power generation systems UGS-1 to UGS-m of the users U via the electric power market DS and performs sales and purchase of environmental value via the environmental value trading market KS. At this time, sales and purchase are performed so that the profit due to a difference between a purchase price and a sales price is the highest, based on trends of the electric power market DS and the environmental value trading market KS. For example, the decarbonization platform executes a process of purchasing inexpensive environmental value and selling the environmental value when the price rises, and the like.

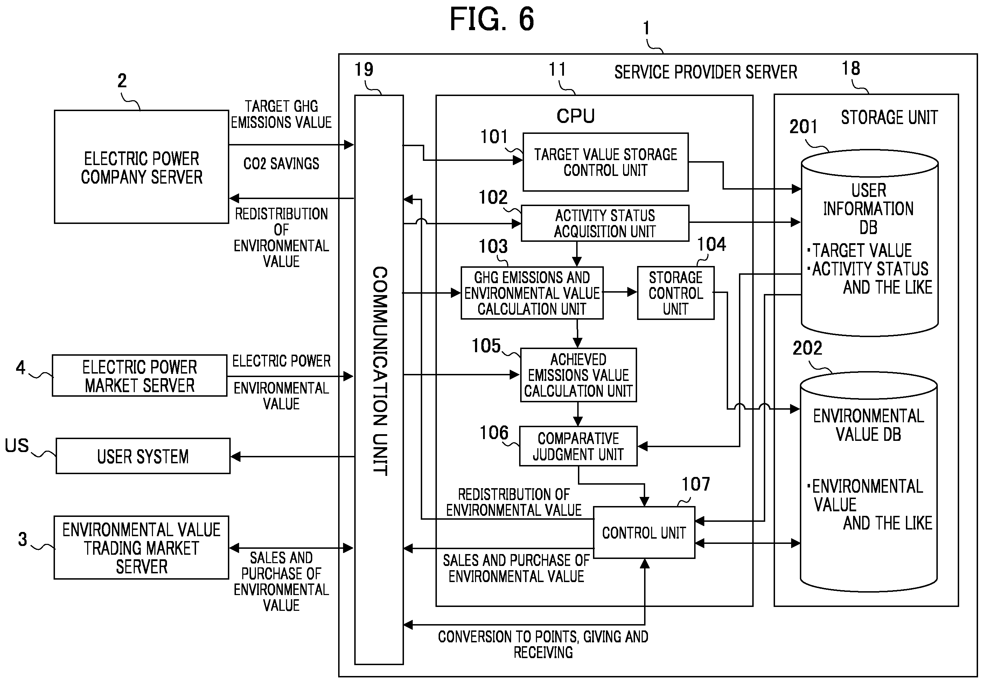

Specifically, for example, the service provider SA executes control to acquire, in December 2021, target greenhouse gas (GHG) emissions values of the users U for January to April 2022, which have been set in December 2021 and cause the target emissions values to be stored into a user information DB 201 (see FIG. 6), and acquires activity statuses of the users U, such as use of renewable energy, operating statuses of factory facilities, and results of or plans for introduction of energy-saving facilities, for example, in January 2022.

For the activity status of each of the users U, for example, the service provider SA calculates results of greenhouse gas (GHG) emissions in January 2022 and environmental value produced by the user U in January 2022.

The service provider SA executes control to cause environmental value held by each of the users U including the calculated environmental value (the environmental value produced in the organization plus environmental value acquired from others) to be stored into the environmental value DB 202, and calculates an achieved greenhouse gas (GHG) emissions value of the user U, for example, in January 2022 by subtracting at least a part of the environmental value stored in the environmental value DB 202 from the greenhouse gas (GHG) emissions.

The service provider SA judges possibility of achievement of a greenhouse gas (GHG) emissions goal by comparing the achieved greenhouse gas (GHG) emissions value and the target greenhouse gas (GHG) emissions value, and controls use of the environmental value stored in the environmental value DB 202 (sales to others, and further compensation for shortage of the target greenhouse gas emissions value of each of users U) based on a result of the judgment. As a result, it becomes possible to effectively use the environmental value.

Next, an information processing system that includes the service provider server according to the one embodiment of the information processing apparatus of the present invention will be described with reference to FIG. 3. FIG. 3 is a block diagram showing an overall configuration of the information processing system for providing the present service of FIG. 1, the information processing system including the one embodiment of the information processing apparatus of the present invention.

The information processing system shown in FIG. 3 is configured to include the service provider server 1 managed by the service provider SA, the electric power company server 2, the environmental value trading market server 3, the electric power market server 4, and each of the user systems US-1 to US-m (m is an integer value of 1 or more and different from n) possessed and managed by the users U1 to Um (see FIG. 1), respectively.

The service provider server 1, the electric power company server 2, the environmental value trading market server 3, the electric power market server 4, and the user electric power generation systems UGS-1 to UGS-m are mutually connected via a network NW such as the Internet.

Among the user systems US-1 to US-m, for example, the user system US-1 includes the solar power generation apparatus SO1, the electric power storage device TK1, the control apparatus CO1, and the like as shown in FIG. 1, and is operated and managed by the user U1. For example, by the user U1 of the user system US-1 concluding a decarbonization platform use contract with the service provider SA, it becomes possible to perform demand/supply control of environmental value and electric power (about whether acquired environmental value and produced electric power are to be sold or self-consumed, and the like) by an instruction from the service provider server 1 to the control apparatus CO1. The same goes for the user systems US-2 to US-m other than the user system US-1.

The electric power company server 2 gives an instruction to the service provider server 1 so as to perform purchase and sell electric power through the electric power market DS and purchase and sell environmental value through the environmental value trading market KS, and it is operated by each person in charge in the electric power company DK.

The environmental value trading market server 3 provides a place for trading environmental value. Specifically, the environmental value trading market server 3 provides the environmental value trading market KS on the Internet. The electric power market server 4 provides a place for trading electric power. Specifically, the electric power market server 4 provides the electric power market DS on the Internet.

Hereinafter, when it is not necessary to individually distinguish among the user electric power generation systems UGS-1 to UGS-m, they will be collectively referred to as "user electric power generation systems UGS".

The service provider server 1 manages operations of the user systems US. The service provider server 1 executes various kinds of processes in order to provide the above functions for the user systems US and the electric power company server 2. Further, on the decarbonization platform, the service provider server 1 executes processes with the environmental value trading market server 3 and the electric power market server 4 for purchase and sales between electric power and environmental value acquired from the users U, the electric power company DK, and the like.

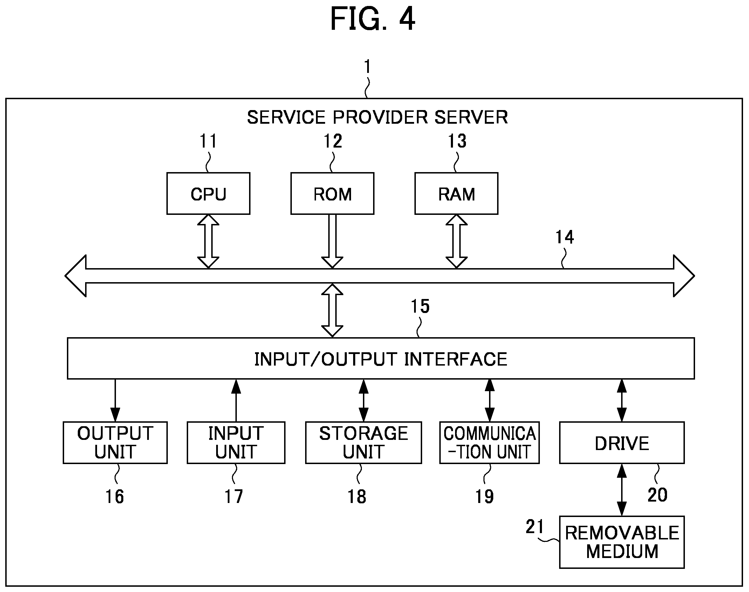

FIG. 4 is a block diagram showing a configuration of hardware of the service provider server 1, which is the one embodiment of the information processing apparatus of the present invention, in the information processing system of FIG. 3.

The service provider server 1 includes a CPU (central processing unit) 11, a ROM (read-only memory) 12, a RAM (random access memory) 13, a bus 14, an input/output interface 15, an output unit 16, an input unit 17, a storage unit 18, a communication unit 19, and a drive 20.

The CPU 11 executes various kinds of processes in accordance with a program stored in the ROM 12 or a program loaded to the RAM 13 from the storage unit 18. In the RAM 13, data and the like required for the CPU 11 to execute the various kinds of processes are also appropriately stored.

The CPU 11, the ROM 12, and the RAM 13 are mutually connected via the bus 14. The input/output interface 15 is also connected to the bus 14. To the input/output interface 15, the output unit 16, the input unit 17, the storage unit 18, the communication unit 19, and the drive 20 are connected.

The output unit 16 is configured with a display such as a liquid crystal display and displays various kinds of images. The input unit 17 is configured with various kinds of hardware buttons and the like and inputs various kinds of information in response to instruction operations by an operator.

The storage unit 18 is configured with a DRAM (dynamic random access memory) or the like and stores various kinds of data. The communication unit 19 controls communication performed with other apparatuses (the electric power company server 2, the environmental value trading market server 3, the electric power market server 4, and the like) via the network NW including the Internet.

The drive 20 is provided as necessary. The drive 20 is appropriately mounted with a removable medium 21 configured with a magnetic disk, an optical disk, a magneto-optical disk, a semiconductor memory, or the like. A program read from the removable medium 21 by the drive 20 is installed into the storage unit 18 as necessary. The removable medium 21 can also store the various kinds of data stored in the storage unit 18 similarly to the storage unit 18.

By cooperation between such various kinds of hardware of the service provider server 1 in FIG. 4 and various kinds of software, it becomes possible for the service provider server 1 to execute various kinds of processes described later. As a result, the service provider SA can provide various kinds of services described later to the users U1 to Um.

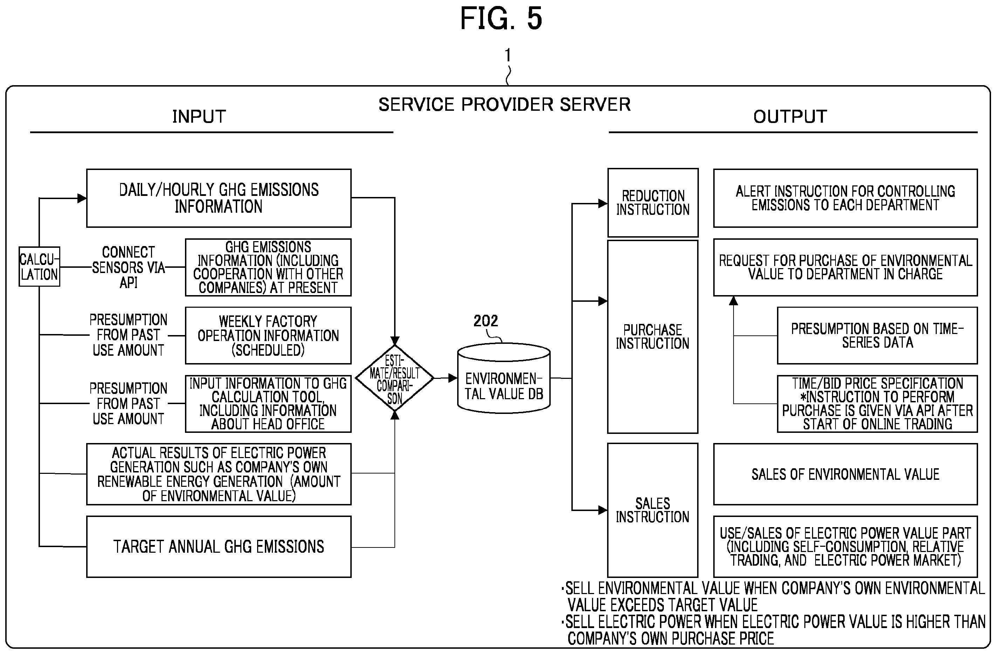

Next, specific input and output of information to and from the environmental value DB (as a service, the decarbonization platform) of FIG. 2 will be described with reference to FIG. 5. FIG. 5 is a diagram showing input to and output from the environmental value DB of FIG. 2.

As shown in FIG. 5, to the service provider server 1, greenhouse gas (GHG) emissions information (including information about emissions caused by cooperation with other companies) at present, weekly factory operation information (scheduled) estimated from a use amount in the past, and input information to a greenhouse gas (GHG) calculation tool estimated from the use amount in the past are inputted, the input information including information not only about factories but also about a head office, sales offices and the like. The greenhouse gas (GHG) calculation tool refers to means for an activity status acquisition unit 102 to acquire the activity status of each of the users U1 to Um. The means for the activity status acquisition unit 102 to acquire the activity status may be any other means. Any activity status acquisition means configured to acquire activity statuses of organizations is possible. Daily and hourly greenhouse gas (GHG) emissions are calculated from the above pieces of information. When a company's own actual generation results (the amount of environmental value) such as renewable energy generation and target annual greenhouse gas (GHG) emissions are inputted, the generation results (the amount of environmental value) and the target annual greenhouse gas (GHG) emissions are compared with the daily and hourly greenhouse gas (GHG) emissions information calculated as described above, that is, the estimates and the results are compared, and a result of the comparison is stored into the environmental value DB 202. In other words, information about how much greenhouse gas (GHG) the company has emitted is inputted to the service provider server 1.

Meanwhile, the service provider server 1 outputs instructions about greenhouse gas (GHG) (reduction in the emissions itself, purchase or sales of environmental value, and the like) based on the information stored in the environmental value DB 202. The instructions include, for example, an alert instruction for controlling emissions to each department, a request for purchase of environmental value (Non-Fossil Certificates, Green Power Certificates, J-Credits, or the like) to a department in charge, and the like. The request for purchase of environmental value (Non-Fossil Certificates, Green Power Certificates, J-Credits, or the like) to the department in charge is presumed based on time-series data. The purchase request includes specification of time and a bid price. After online trading is started, a purchase instruction is made by API (Application Programming Interface).

Further, the service provider server 1 executes sales of a part of electric power (including self-consumption, relative trading, and the electric power market) and sales of environmental value, based on the above-described information stored in the environmental value DB 202. Here, environmental value is sold when a company's own environment value of the company exceeds a target value, and electric power is sold when a sales price of electric power is higher than the company's own purchase price.

A functional configuration of the service provider server of the information processing system of FIG. 3 will be described with reference to FIG. 6. FIG. 6 is a block diagram showing a functional configuration for executing at least a process for trading including environmental value, in a functional configuration of the service provider server 1 including the hardware of FIG. 4.

As shown in FIG. 6, in one area of the storage unit 18 of the service provider server 1, the user information DB 201 and the environmental value DB 202 are provided.

Each of the users U1 to Um is an organization, for example, a company, a factory, a business division, or a department and is assumed to be, for example, a company. In the user information DB 201, company information about each of the users U1 to Um is stored, and, additionally, information about electric power trading costs of each of the users U1 to Um is stored as trading costs information. For example, in the case of the user U1, the trading costs information includes, in addition to trading costs incurred in sales and purchase of electric power by the user U1, the purchase price of a storage device TK, a land use fee, consignment costs for transmitting electric power through an electrical grid, and the like. In addition, in the user information DB 201, a target greenhouse gas (GHG) emissions value (a target value for January to April 2022 set in December 2021) of each company, which has been acquired at a certain timing, for example, in December 2021 is stored. Further, in the user information DB 201, data of the activity status of each of the companies of the users U1 to Um is stored. The activity status data is data of, for example, use of renewable energy, operating statuses of factory facilities, and results of or plans for introduction of energy-saving facilities.

In the environmental value DB 202, environmental value possessed by each of the companies of the users U1 to Um, including environmental value calculated in the company (environmental value produced in the organization) (the environmental value produced in the organization plus environmental value acquired from others) are stored.

Specifically, for each of the companies of the users U1 to Um, data such as a target CO₂ emissions value acquired from the company and CO₂ emissions (or in CO₂ emission reductions) that have been actually monitored by sensors (the loT sensors SE1 of FIG. 1 and the like) are stored in the environmental value DB 202. Further, in the environmental value DB 202, information about demand/supply and sales/purchase of electric power, which has been obtained from the electric power company server 2, the electric power market server 4, and the like is stored. For example, electric power sales and purchase prices on the electric power market DS in a predetermined time zone in the past (information about sales and purchase results in the past) is stored in the environmental value DB 202. Additionally, in the environmental value DB 202, price scenario data and the like as price data of the environmental value trading market KS is stored.

Further, as shown in FIG. 6, in the CPU 11 of the service provider server 1, a target value storage control unit 101, the activity status acquisition unit 102, a GHG emissions and environmental value calculation unit 103, a storage control unit 104, an achieved emissions value calculation unit 105, a comparative judgment unit 106, a control unit 107, and the like function when a process related with environmental value is executed.

The target value storage control unit 101 executes control to acquire (for example, in December 2021) the target greenhouse gas (GHG) emissions value (for example, the target value for January to April 2022 set in December 2021) of each of the users U1 to Um and cause the target emissions value to be stored into the user information DB 201.

The activity status acquisition unit 102 acquires the activity status (for example, the actual value of the activity status in January 2022) of each of the users U1 to Um, for example, in February 1, 2022. The activity status of each of the users U1 to Um acquired by the activity status acquisition unit 102 is not limited to the actual value of activity results in the past and may be a future activity plan or a real-time activity status. The GHG emissions and environmental value calculation unit 103 calculates greenhouse gas (GHG) emissions (actual results of greenhouse gas (GHG) emissions in January 2022) based on the activity status of each of the companies of the users U1 to Um, and environmental value (for example, environmental value produced by the company in January 2022). Specifically, the activity status acquisition unit 102 acquires the activity status by calculating the activity status based on a renewable energy use amount of each of the companies of the users U1 to Um, operating statuses of factory facilities possessed by the company, which are detected by the loT sensors SE (see FIG. 1), and actual results of or plans for introduction of energy-saving facilities and the like obtained from a user server of each of the user systems US-1 to US-m (the user server US1 (see FIG. 1) in the case of the user system US-1). Thereby, since the activity status is calculated in detail based on the renewable energy use amount of each of the companies of the users U1 to Um, the operating statuses of the factory facilities possessed by the organization (for example, the solar power generation apparatus SO), which are detected by the sensors (for example, the loT sensors SE of FIG. 1), and the actual results of or plans for introduction of the facilities, it is possible to highly accurately obtain the activity status.

For the activity status highly accurately acquired by the activity status acquisition unit 102, the GHG emissions and environmental value calculation unit 103 calculates greenhouse gas (GHG) emissions and an amount of possessed environmental value in accordance with a predetermined calculation method using emission intensity and a conversion coefficient. By calculating greenhouse gas (GHG) emissions and environmental value based on a highly accurately acquired actual activity status as described above, it is possible to enhance the accuracy of a calculated value of the environmental value.

The storage control unit 104 executes control to cause environmental value possessed by each company, including the calculated environmental value (the environmental value produced in the company) (the environmental value produced in the company plus environmental value acquired from others) to be stored into the environmental value DB 202.

The achieved emissions value calculation unit 105 calculates an achieved greenhouse gas (GHG) emissions value (for example, an achieved value for January 2022) of the organization by subtracting at least a part of the environmental value stored in the environmental value DB 202 from the calculated greenhouse gas (GHG) emissions.

The comparative judgment unit 106 makes a judgment about possibility of achievement of a greenhouse gas (GHG) emissions goal by comparing the achieved greenhouse gas (GHG) emissions value and the target greenhouse gas (GHG) emissions value.

The control unit 107 controls use of the environmental value stored in the environmental value DB 202 based on a result of the judgment by the comparative judgment unit 106.

The control unit 107 executes control to provide at least a part of the environmental value stored in the environmental value DB 202 to a third party on the environmental value trading market KS or the like and cause environmental value acquired by a company to be stored into the environmental value DB 202, via the storage control unit 104. By exchanging environmental value using the environmental value DB 202 as described above, it is possible to comprehensively manage giving and receiving of environmental value.

The control unit 107 executes control to provide at least a part of the environmental value stored in the environmental value DB 202 to a third party on the environmental value trading market KS or the like when it is judged by the comparative judgment unit 106 that achievement of the goal is possible, and executes control for acquiring environmental value from the environmental value trading market KS when it is judged by the comparative judgment unit 106 that achievement of the goal is impossible. By controlling provision or acquisition of environmental value for or from the environmental value trading market KS according to whether achievement of a greenhouse gas (GHG) emissions goal is possible or not as described above, it is possible to flexibly use environmental value.

By the control unit 107 executing control to preferentially provide environmental value for a related organization (for example, another company doing business with a company) as the control to provide environmental value for the environmental value trading market KS, it becomes possible to obtain a cooperation relationship with the related organization.

The control unit 107 executes control to preferentially acquire environmental value with tracking, as the control to acquire environmental value from the environmental value trading market KS. By preferentially acquiring environmental value with tracking from the environmental value trading market KS as described above, information about an electric power source such as a power plant from which the environmental value is derived becomes clear, and it is possible to enhance the credibility of the environmental value.

When a company acquires renewable energy, the control unit 107 executes control to separate environmental value from the renewable energy and cause the separated environmental value to be stored into the environmental value DB 202. By separating environmental value from renewable energy as described above, it is possible to sell the environmental value through a sales channel different from an original sales channel, for example, sell only the environmental value to the environmental value trading market KS.

The control unit 107 executes control to provide at least a part of environmental value to a person who presents the highest purchase price among persons who perform trading on the environmental value trading market KS and desire to purchase the environmental value. Thereby, it is possible to form a market, for example, like auction, and it is possible to sell environmental value at a higher price.

The control unit 107 executes control to select one or more non-fossil value trading markets such as renewable energy value trading markets and Sophisticated Methods Act obligation fulfilment markets to provide environmental value, as the control to provide environmental value for a person who trades environmental value on the environmental value trading market KS. Thereby, since it is possible to select one or more non-fossil value trading markets, such as renewable energy value trading markets and Sophisticated Methods Act obligation fulfilment markets to perform sales, it is possible to increase sales channels for environmental value.

When acquiring environmental value with tracking, the control unit 107 executes control to purchase the environmental value with tracking at a price including a donation to a community. By doing so, it is possible to, in the case of purchasing environmental value with tracking, purchase the environmental value at a price including a donation to a community and contribute to the community.

The control unit 107 executes control to provide environmental value in combination with electric power generated by a company. Thereby, it is possible to freely combine electric power that is originally different from the environmental value of original electric power with the environmental value. Therefore, it is possible to sell environmental value, giving added value to the environmental value, for example, sell a special combination of environmental value and electric power at a premium price.

The control unit 107 executes control to convert environmental value to different value (for example, points). By converting environmental value to points as described above, it is possible to utilize the environmental value for uses other than the use of being subtracted from greenhouse gas (GHG) emissions.

When a purchase price of environmental value is lower than a price obtained by subtracting trading costs from a sales price, the control unit 107 executes control to sell the environmental value stored in the environmental value DB 202 and purchase environmental value. Thereby, it is possible for a company to sell environmental value possessed by the company and inexpensively purchase necessary environmental value.

As described above, according to the service provider server 1 of the information processing system of the present embodiment, it is possible to, by separating environmental value from electric power and providing the environmental value for an organization that needs the environmental value, effectively use the environmental value.

An embodiment of the present invention has been described above. The present invention, however, is not limited to the embodiment described above, and modifications, improvements, and the like within a range of being able to achieve the object of the present invention are included in the present invention.

In the embodiment described above, the target value storage control unit 101 executes the control to acquire, in December 2021, the target greenhouse gas (GHG) emissions value of a company for January to April 2022 set in December 2021 and causes the target emissions value to be stored into the user information DB 201. Other means is also possible. First storage control unit configured to execute control to acquire a target greenhouse gas (GHG) emissions value of an organization and cause the target emissions value to be stored into a first database is sufficient.

In the embodiment described above, the activity status acquisition unit 102 acquires the use of renewable energy, operating statuses of factory facilities, actual results of or plans for introduction of energy-saving facilities and the like, and the like of a company in January 2022. Other unit is also possible. Activity status acquisition unit configured to acquire an activity status of an organization is sufficient.

In the embodiment described above, the GHG emissions and environmental value calculation unit 103 calculates, for the activity status of a company, the actual greenhouse gas (GHG) emissions in January 2022 and the environmental value produced by the company in January 2022. Other unit is also possible. Calculation unit configured to calculate, for the activity status of an organization, a greenhouse gas (GHG) emissions and environmental value is sufficient.

In the embodiment described above, the storage control unit 104 executes the control to cause environmental value possessed by a company including calculated environmental value (environmental value produced in the organization) (the environmental value produced in the organization plus environmental value acquired from others) to be stored into the environmental value DB 202. Other unit is also possible. Second storage control unit configured to execute control to cause environmental value possessed by an organization, including calculated environmental value, to be stored in to a second database is sufficient.

In the embodiment described above, the achieved emissions value calculation unit 105 calculates the achieved greenhouse gas (GHG) emissions value in January 2022 in a company by subtracting at least a part of the environmental value stored in the environmental value DB 202 from the calculated emissions. Other unit is also possible. Achieved emissions value calculation unit configured to calculate an achieved greenhouse gas (GHG) emissions value of an organization by subtracting at least a part of environmental value stored in the second database from the calculated emissions is sufficient.

In the embodiment described above, the comparative judgment unit 106 makes a judgment about possibility of achievement of a greenhouse gas (GHG) emissions goal by comparing the achieved greenhouse gas emissions value and the target emissions value. Other unit is also possible. Comparative judgment unit configured to make a judgment about possibility of achievement of a greenhouse gas (GHG) emissions goal by comparing an achieved greenhouse gas (GHG) emissions value and a target emissions value is sufficient.

In the embodiment described above, the control unit 107 controls use of the environmental value stored in the environmental value DB 202 based on a result of the judgment by the comparative judgment unit 106. Other unit is also possible. Control unit configured to control use of environmental value stored in the second database based on a result of a judgment by the comparative judgment unit is sufficient.

Further, for example, the series of processes described above can be executed by hardware or by software. In other words, for example, the functional configuration of FIG. 6 is merely an exemplification, and the functional configuration is not limited thereto. In other words, it is sufficient if an information processing system has a function capable of executing the series of processes described above as a whole, and which functional blocks are to be used to realize the function is not especially limited to the case of FIG. 6. Further, places where the functional blocks and the databases exist are not especially limited to FIG. 6, and arbitrary places are possible. For example, at least a part of functional blocks and databases required to execute various kinds of processes may be transferred to another information processing apparatus. On the contrary, functional blocks and databases of an information processing apparatus may be transferred to a server or the like. Further, one functional block may be configured with a single piece of hardware, with a single piece of software, or with a combination thereof.

In the case of causing the series of processes to be executed by software, a program constituting the software is installed into a computer or the like from a network or a recording medium. The computer may be a computer incorporated in dedicated hardware. Further, the computer may be a computer capable of executing various kinds of functions, by various kinds of programs being installed, for example, a general-purpose smartphone or personal computer, in addition to a server.

A recording medium that includes such a program is not only configured with a removable medium not shown, which is distributed to a user separately from an apparatus body to provide the program but also configured with a recording medium provided for a user, being incorporated in an apparatus body in advance.

In the present specification, the steps describing the program recorded in a recording medium include not only processes that are chronologically implemented in order of the processes but also processes that are not necessarily chronologically implemented but executed in parallel or individually. Further, in the present specification, it is assumed that the term "system" means an overall apparatus configured with a plurality of devices, a plurality of means, and the like.

In other words, an information processing apparatus to which the present invention is applied only needs to have a configuration as below and can take various types of embodiments. The information processing apparatus (for example, the service provider server 1 of FIG. 4) to which the present invention is applied includes:
first storage control unit (for example, the target value storage control unit 101 of FIG. 6) configured to execute control to acquire (for example, in December 2021) a target greenhouse gas (GHG) emissions value (for example, a target value for January to April 2022 set in December 2021) of an organization (for example, assumed to be a company below among a company, a factory, a business division, a department, and the like) and cause the target greenhouse gas emissions value to be stored into a first database (for example, the user information DB 201 of FIG. 6);
activity status acquisition unit (for example, the activity status acquisition unit 102 of FIG. 6) configured to acquire (for example, on February 1, 2022) an activity status (for example, use of renewable energy, operating statuses of factory facilities, actual results of or plans for introduction of energy-saving facilities and the like, and the like in January 2022) of the organization (a company or the like);
calculation unit (for example, the GHG emissions and environmental value calculation unit 103 of FIG. 6) configured to, for the activity status of the organization (a company or the like), calculate greenhouse gas (GHG) emissions (actual results of emissions in January 2022) and environmental value (for example, environmental value produced in the organization (a company or the like) in January 2022);
second storage control unit (for example, the storage control unit 104 of FIG. 6) configured to execute control to cause environmental value possessed by the organization (a company or the like) including the calculated environmental value (the environmental value produced in the organization) (the environmental value produced in the organization plus environmental value acquired from others) to be stored into a second database (for example, the environmental value DB 202 of FIG. 6);
achieved emissions value calculation unit (for example, the achieved emissions value calculation unit 105 of FIG. 6) configured to calculate an achieved greenhouse gas (GHG) emissions value (for example, an achieved value for January 2022) of the organization (a company or the like) by subtracting at least a part of the environmental value stored in the second database (for example, the environmental value DB 202 of FIG. 6) from the calculated greenhouse gas emissions;
comparative judgment unit (for example, the comparative judgment unit 106 of FIG. 6) configured to make a judgment about possibility of achievement of a greenhouse gas (GHG) emissions goal by comparing the achieved greenhouse gas (GHG) emissions value and the target greenhouse gas emissions value; and
control unit (for example, the control unit 107 of FIG. 6) configured to control use of the environmental value stored in the second database (for example, the environmental value DB 202 of FIG. 6) based on a result of the judgment by the comparative judgment unit (for example, the comparative judgment unit 106 of FIG. 6). Thereby, it is possible to effectively use environmental value.

The activity status acquisition unit (for example, the activity status acquisition unit 102 of FIG. 6) acquires the activity status by calculating the activity status based on a renewable energy use amount of the organization (a company or the like), operating statuses of factory facilities possessed by the organization (a company or the like), which are detected by sensors, and actual results or plans for introduction of facilities. Thereby, for the organization (a company or the like) of a user, an activity status is calculated in detail based on a renewable energy use amount, operating statuses of facilities (for example, a solar power generation apparatus SO) possessed by the organization (a company or the like), which are detected by sensors (for example, the loT sensors SE of FIG. 1), and plans for introduction of the facilities, and, therefore, it is possible to highly accurately obtain the activity status.

For the activity status highly accurately acquired by the activity status acquisition unit, the calculation unit (for example, the GHG emissions and environmental value calculation unit 103 of FIG. 6) calculates the greenhouse gas (GHG) emissions and the environmental value in accordance with a predetermined calculation method using emission intensity and a conversion coefficient. By calculating greenhouse gas (GHG) emissions and environmental value based on a highly accurately acquired activity status as described above, it is possible to enhance the accuracy of a calculated value of the environmental value.

The control unit (for example, the control unit 107 of FIG. 6) executes control to provide at least a part of the environmental value stored in the second database (for example, the environmental value DB 202 of FIG. 6) to a third party (for example, the environmental value trading market KS) and cause environmental value acquired by the organization (for example, a company) to be stored into the second database (for example, the environmental value DB 202 of FIG. 6), via the second storage control unit (for example, the storage control unit 104 of FIG. 6). By exchanging environmental value using the second database (for example, the environmental value DB 202 of FIG. 6) as described above, it is possible to comprehensively manage giving and receiving of environmental values.

The control unit (for example, the control unit 107 of FIG. 6) executes control to provide at least a part of the environmental value stored in the second database (for example, the environmental value DB 202 of FIG. 6) to a third party (for example, the environmental value trading market KS) if it is judged by the comparative judgment unit (for example, the comparative judgment unit 106 of FIG. 6) that the achievement of the goal is possible, and
executes control for acquiring environmental value from a third party (for example, the environmental value trading market KS) if it is judged by the comparative judgment unit (for example, the comparative judgment unit 106 of FIG. 6) that the achievement of the goal is impossible. By controlling provision or acquisition of environmental value to or from a third party (for example, the environmental value trading market KS) according to whether achievement of a greenhouse gas (GHG) emissions goal is possible or not as described above, it is possible to flexibly use environmental value.

The control unit (for example, the control unit 107 of FIG. 6) executes, as the control to provide the environmental value to a third party (for example, persons performing trading on the environmental value trading market KS), control to preferentially provide the environmental value to a related organization (for example, another company doing business with a company). Thereby, it becomes possible to obtain a cooperation relationship with the related organization.

The control unit (for example, the control unit 107 of FIG. 6) executes, as the control to acquire the environmental value from a third party (for example, the environmental value trading market KS), control to preferentially acquire environmental value with tracking. Thus, by preferentially acquiring environmental value with tracking from a third party (for example, the environmental value trading market KS), electric power source information such as a power plant from which the environmental value is derived becomes clear, and it is possible to enhance the credibility of the environmental value.

When the organization (a company or the like) acquires renewable energy, the control unit (for example, the control unit 107 of FIG. 6) executes control to separate environmental value from the renewable energy and cause the separated environmental value to be stored into the second database (for example, the environmental value DB 202 of FIG. 6). By separating environmental value from renewable energy as described above, it is possible to sell the environmental value through a sales channel different from an original sales channel, for example, sell only the environmental value to a third party (for example, a person performing trading on the environmental value trading market KS).

The control unit (for example, the control unit 107 of FIG. 6) executes the control to provide at least a part of the environmental value to a third party presenting a highest purchase price among third parties (for example, persons performing trading on the environmental value trading market KS) desiring to purchase the environmental value. Thereby, it is possible to form a market, for example, like auction, and it is possible to sell environmental value at a higher price.

The control unit (for example, the control unit 107 of FIG. 6) executes, as the control to provide the environmental value to a third party (for example, a person performing trading through the environmental value trading market KS), control to select one or more non-fossil value trading markets (for example, renewable energy value trading markets and Sophisticated Methods Act obligation fulfilment markets) and provide the environmental value thereto. Thereby, it is possible to select one or more non-fossil value trading markets (for example, renewable energy value trading markets and Sophisticated Methods Act obligation fulfilment markets) to perform sales. Therefore, it is possible to increase sales channels for environmental value.

When acquiring environmental value with tracking, the control unit (for example, the control unit 107 of FIG. 6) executes control to purchase the environmental value with tracking at a price including a donation to a community. By doing so, it is possible to, in the case of purchasing environmental value with tracking, purchase the environmental value at a price including a donation to a community.

The control unit (for example, the control unit 107 of FIG. 6) executes control to provide the environmental value in combination with electric power generated by the organization (a company or the like). Thereby, since it is possible to freely combine electric power that is originally separate from the environmental value of original electric power with environmental value, it is possible to perform sales by giving added value to environmental value, for example, perform sales at a premium price by making a special combination of environmental value and electric power.

The control unit (for example, the control unit 107 of FIG. 6) executes control to convert the environmental value to different value (for example, points). By converting environmental value to different value (for example, to points) as described above, it is possible to utilize the environmental value for uses other than the use of being subtracted from greenhouse gas (GHG) emissions.

When a purchase price of the environmental value is lower than a price obtained by subtracting trading costs from a sales price, the control unit (for example, the control unit 107 of FIG. 6) executes control to sell the environmental value stored in the second database (for example, the environmental value DB 202 of FIG. 6) and purchase environmental value. Thereby, it is possible for a company to sell environmental value possessed by the company and inexpensively purchase necessary environmental value.

An information processing method executed by an information processing apparatus (for example, the service provider server 1 of FIG. 4), the information processing method including:
a first storage control step of executing control to acquire (in December 2021) a target greenhouse gas (GHG) emissions value (for example, a target value for January to April 2022 set in December 2021) of an organization (for example, assumed to be a company below among a company, a factory, a business division, a department, and the like) and causing the target emissions value to be stored into a first database (for example, the user information DB 201 of FIG. 6);
an activity status acquisition step of acquiring (for example, on February 1, 2022) an activity status (for example, use of renewable energy, operating statuses of factory facilities, and actual results of or plans for introduction of energy-saving facilities and the like, and the like in January 2022) of the organization (a company or the like);
a calculation step of, for the activity status of the organization (a company or the like), calculating greenhouse gas (GHG) emissions (for example, actual results of emissions in January 2022) and environmental value (for example, environmental value produced in the company in January 2022);
a second storage control step of executing control to cause environmental value possessed by the organization (a company or the like) including the calculated environmental value (for example, the environmental value produced in the organization)(for example, the environmental value produced in the organization plus environmental value acquired from others) to be stored into a second database (for example, the environmental value DB 202 of FIG. 6);
an achieved emissions value calculating step of calculating an achieved greenhouse gas (GHG) emissions value (for example, an achieved value for January 2022) of the organization (a company or the like) by subtracting at least a part of the environmental value stored in the second database (for example, the environmental value DB 202 of FIG. 6) from the calculated emissions;
a comparative judgment step of making a judgment about possibility of achievement of a greenhouse gas (GHG) emissions goal by comparing the achieved greenhouse gas (GHG) emissions value and the target greenhouse gas (GHG) emissions value; and
a control step of controlling use of the environmental value stored in the second database (for example, the environmental value DB 202 of FIG. 6) based on a result of the judgment by the comparative judgment step. Thereby, it is possible to effectively use environmental value.

It is possible to effectively use environmental value by causing a computer to execute a control process, the control process including:
a first storage control step of executing control to acquire (for example, in December 2021) a target greenhouse gas (GHG) emissions value (a target value for January to April 2022 set in December 2021) of an organization (for example, assumed to be a company below among a company, a factory, a business division, a department, and the like) and causing the target emissions value to be stored into a first database (for example, the user information DB 201 of FIG. 6);
an activity status acquisition step of acquiring (on February 1, 2022) an activity status (for example, use of renewable energy, operating statuses of factory facilities, and actual results of or plans for introduction of energy-saving facilities and the like, and the like in January 2022) of the organization (a company or the like);
a calculation step of, for the activity status of the organization (a company or the like), calculating greenhouse gas (GHG) emissions (actual results of emissions in January 2022) and environmental value (for example, environmental value produced in the company or the like in January 2022);
a second storage control step of executing control to cause environmental value possessed by the organization (a company or the like) including the calculated environmental value (the environmental value produced in the organization) (the environmental value produced in the organization plus environmental value acquired from others) to be stored into a second database (for example, the environmental value DB 202 of FIG. 6);
an achieved emissions value calculating step of calculating an achieved greenhouse gas (GHG) emissions value (for example, an achieved value for January 2022) of the organization (a company or the like) by subtracting at least a part of the environmental value stored in the second database (for example, the environmental value DB 202 of FIG. 6) from the calculated emissions;
a comparative judgment step of making a judgment about possibility of achievement of a greenhouse gas (GHG) emissions goal by comparing the achieved greenhouse gas (GHG) emissions value and the target greenhouse gas (GHG) emissions value; and
a control step of controlling use of the environmental value stored in the second database (for example, the environmental value DB 202 of FIG. 6) based on a result of the judgment by the comparative judgment step.

### EXPLANATION OF REFERENCE NUMERALS

1 service provider server
2 electric power company server
3 environmental value trading market server
4 electric power market server
11 CPU
12 ROM
13 RAM
14 bus
15 input/output interface
16 output unit
17 input unit
18 storage unit
19 communication unit
101 target value storage control unit
102 activity status acquisition unit
103 GHG emissions and environmental value calculation unit
104 storage control unit
105 achieved emissions value calculation unit
106 comparative judgment unit
107 control unit
201 user information DB
202 environmental value DB

## Claims

1. An information processing apparatus comprising:
first storage control unit configured to execute control to acquire a target greenhouse gas emissions value of an organization and cause the target greenhouse gas emissions value to be stored into a first database;
activity status acquisition unit configured to acquire an activity status of the organization;
calculation unit configured to, for the activity status of the organization, calculate greenhouse gas emissions and environmental value;
second storage control unit configured to execute control to cause environmental value possessed by the organization, including the calculated environmental value, to be stored into a second database;
achieved emissions value calculation unit configured to calculate an achieved greenhouse gas emissions value of the organization by subtracting at least a part of the environmental value stored in the second database from the calculated greenhouse gas emissions;
comparative judgment unit configured to make a judgment about possibility of achievement of a greenhouse gas emissions goal by comparing the achieved greenhouse gas emissions value and the target greenhouse gas emissions value; and
control unit configured to control use of the environmental value stored in the second database based on a result of the judgment by the comparative judgment unit.

2. The information processing apparatus according to claim 1, wherein
the activity status acquisition unit acquires the activity status by calculating the activity status based on a renewable energy use amount of the organization, operating statuses of facilities possessed by the organization, which are detected by sensors, and planning for introduction of the facilities.

3. The information processing apparatus according to claim 1 or 2, wherein the calculation unit calculates the greenhouse gas emissions and the environmental value in accordance with a predetermined calculation method using emission intensity and a conversion coefficient.

4. The information processing apparatus according to claim 1, wherein
the control unit executes control to provide at least a part of the environmental value stored in the second database to a third party and cause environmental value acquired by the organization to be stored into the second database, via the second storage control unit.

5. The information processing apparatus according to claim 4, wherein
the control unit
executes control to provide at least a part of the environmental value stored in the second database to a third party if it is judged by the comparative judgment unit that the achievement of the goal is possible, and
executes control for acquiring environmental value from a third party if it is judged by the comparative judgment unit that the achievement of the goal is impossible.

6. The information processing apparatus according to claim 5, wherein the control unit executes, as the control to provide the environmental value to a third party, control to preferentially provide the environmental value to a related organization.

7. The information processing apparatus according to claim 5 or 6, wherein the control unit executes, as the control to acquire the environmental value from a third party, control to preferentially acquire environmental value with tracking.

8. The information processing apparatus according to claim 4, wherein,
when the organization acquires renewable energy, the control unit executes control to separate environmental value from the renewable energy and cause the separated environmental value to be stored into the second database.

9. The information processing apparatus according to claim 4, wherein
the control unit executes the control to provide at least a part of the environmental value to a third party presenting a highest purchase price among third parties desiring to purchase the environmental value.

10. The information processing apparatus according to claim 4, wherein
the control unit executes, as the control to provide the environmental value to a third party, control to select one or more among one or more non-fossil value trading markets and one or more renewable energy value trading markets and provide the environmental value thereto.

11. The information processing apparatus according to claim 4, wherein,
when acquiring environmental value with tracking, the control unit executes control to purchase the environmental value with tracking at a price including a donation to a community.

12. The information processing apparatus according to claim 4, wherein
the control unit executes control to provide the environmental value in combination with electric power generated by the organization.

13. The information processing apparatus according to claim 1, wherein
the control unit executes control to convert the environmental value to different value.

14. The information processing apparatus according to claim 1, wherein,
when a purchase price of the environmental value is lower than a price obtained by subtracting trading costs from a sales price, the control unit executes control to sell the environmental value stored in the second database and purchase environmental value.

15. An information processing method executed by an information processing apparatus, the information processing method comprising:
a first storage control step of executing control to acquire a target greenhouse gas emissions value of an organization and cause the target greenhouse gas emissions value to be stored into a first database;
an activity status acquisition step of acquiring an activity status of the organization;
a calculation step of, for the activity status of the organization, calculating greenhouse gas emissions and environmental value;
a second storage control step of executing control to cause environmental value possessed by the organization, including the calculated environmental value, to be stored into a second database;
an achieved emissions value calculation step of calculating an achieved greenhouse gas emissions value of the organization by subtracting at least a part of the environmental value stored in the second database from the calculated greenhouse gas emissions;
a comparative judgment step of making a judgment about possibility of achievement of a greenhouse gas emissions goal by comparing the achieved greenhouse gas emissions value and the target greenhouse gas emissions value; and
a control step of controlling use of the environmental value stored in the second database based on a result of a process of the judgment at the comparative judgment step.

16. A program that causes a computer to execute a control process, the control process including:
a first storage control step of executing control to acquire a target greenhouse gas emissions value of an organization and cause the target greenhouse gas emissions value to be stored into a first database;
an activity status acquisition step of acquiring an activity status of the organization;
a calculation step of, for the activity status of the organization, calculating greenhouse gas emissions and environmental value;
a second storage control step of executing control to cause environmental value possessed by the organization, including the calculated environmental value, to be stored into a second database;
an achieved emissions value calculation step of calculating an achieved greenhouse gas emissions value of the organization by subtracting at least a part of the environmental value stored in the second database from the calculated greenhouse gas emissions;
a comparative judgment step of making a judgment about possibility of achievement of a greenhouse gas emissions goal by comparing the achieved greenhouse gas emissions value and the target greenhouse gas emissions value; and
a control step of controlling use of the environmental value stored in the second database based on a result of a process of the judgment at the comparative judgment step.
